# EUROPÄISCHE PATENTSCHRIFT

(11) **EP 2 750 933 B1**
(45) Veröffentlichungstag und Bekanntmachung des Hinweises auf die Patenterteilung: **12.10.2016**
(21) Anmeldenummer: 12759390.3
(22) Anmeldetag: 28.08.2012
(51) Int. Cl.: B60R 21/0132, B60R 21/0134

(54) **VERFAHREN ZUM ANSTEUERN VON SICHERHEITSAKTUATORIK EINES KRAFTFAHRZEUGS**
METHOD FOR DRIVING A SAFETY ACTUATOR SYSTEM OF A MOTOR VEHICLE
PROCÉDÉ DE COMMANDE D'UN SYSTÈME D'ACTIONNEMENT DE SÉCURITÉ D'UN VÉHICULE À MOTEUR

(30) Priorität: 02.09.2011 DE 102011082067
(43) Veröffentlichungstag der Anmeldung: 09.07.2014
(73) Patentinhaber: Robert Bosch GmbH, 70442 Stuttgart (DE)
(72) Erfinder: FREIENSTEIN, Heiko, 71263 Weil der Stadt (DE); MAUR, Marcel, 71679 Asperg (DE)
(86) Internationale Anmeldenummer: PCT/EP2012/066663
(87) Internationale Veröffentlichungsnummer: WO 2013/030179

(56) Entgegenhaltungen:
- DE-A1- 10 320 828
- DE-A1-102005 038 226
- DE-C1- 10 121 386

## Beschreibung

Die vorliegende Erfindung betrifft ein Verfahren zum Ansteuern von Sicherheitsaktuatorik eines Kraftfahrzeugs.

### Stand der Technik

Im Bereich der Sicherheitstechnik von Kraftfahrzeugen ist es bekannt, dass eine Stärke eines Eingriffs eines Sicherheitssystems unter Berücksichtigung einer Gefährdung der Insassen, durch eine Fahrsituation und durch eine momentane Stellung des Fahrzeugsitzes festgelegt werden kann.

Beispielsweise offenbart WO 2004/103779 A1 ein Insassenschutzsystem eines Kraftfahrzeugs, welches durch eine schnelle Verstellung eines Sitzes des Kraftfahrzeugs den Fahrzeugsitz in eine Aufprall-optimierte Position bringt.

Aus "12. VDA Technischer Kongress 2010, Baumann et al.", "PRE-SAFE Pulse, die Erweiterung des Insassenschutzes durch Nutzung der Vorunfallphase" ist ferner ein vorauslösendes, voranstoßendes System bekannt, welches in einem Frontaufprall eines Kraftfahrzeugs mittels eines Airbags oder eines Schultergurts einen Insassen des Kraftfahrzeugs in einer Voraufprallphase derart vorbeschleunigt, dass sich eine Geschwindigkeit durch einen Aufprallpuls und eine Geschwindigkeit der Vorbeschleunigung destruktiv überlagern. Dokument DE 10 2005 038 226 offenbart ein verfahren gemäß dem Oberbegriff von Anspruch 1.

Bekannt sind bei Kraftfahrzeugen, insbesondere der oberen Klassen, elektromotorische Gurtstraffer. Weiterhin ist bei derartigen Kraftfahrzeugen eine vorausschauende Sensorik, zum Beispiel ein Radarsystem zu einer Abstandsregelung, sowie eine mittels einer automatischen Bremseinrichtung automatisch eingeleitete Bremsung bekannt.

### Offenbarung der Erfindung

Es ist die Aufgabe der vorliegenden Erfindung, ein verbessertes Verfahren zur Ansteuerung von Sicherheitsaktuatorik eines Kraftfahrzeugs bereitzustellen.

Die Aufgabe wird gelöst mittels eines Verfahrens zum Ansteuern von Sicherheitsaktuatorik eines Kraftfahrzeugs, aufweisend:
- Ermitteln eines Gefährdungsmodells des Kraftfahrzeugs mittels vorausschauender Sensorik und wenigstens eines Kennwerts eines Fahrbetriebs des Kraftfahrzeugs;
- Ermitteln einer Kontrollierbarkeit des Kraftfahrzeugs durch einen Fahrer des Kraftfahrzeugs mittels des wenigstens einen Kennwerts; und
- Ansteuern der Sicherheitsaktuatorik in einem Ausmaß, welches vom Gefährdungsmodell und von der Kontrollierbarkeit abhängt.

Mittels des erfindungsgemäßen Verfahrens wird ein Grad eines Eingriffs der Sicherheitsaktuatorik auf den Fahrer des Kraftfahrzeugs vorteilhaft in Abhängigkeit von einer Kontrollierbarkeit des Kraftfahrzeugs durch den Fahrer ausgestaltet. Auf diese Weise wird dem Fahrer eine Einflussnahme auf Bedienelemente des Kraftfahrzeugs und somit auf das Fahrverhalten des Kraftfahrzeugs in einem größtmöglichen Ausmaß belassen, so dass ein unter Umständen überdimensionierter Eingriff der Sicherheitsaktuatorik auf den Fahrbetrieb unterbleibt bzw. stark reduziert ist. Dadurch kann eine optimierte Kombination aus dem ermittelten Gefährdungsmodell und der ermittelten Kontrollierbarkeit für ein Ausmaß einer Ansteuerung bzw. Aktivierung der Sicherheitsaktuatorik des Kraftfahrzeugs verwendet werden.

Eine bevorzugte Ausführungsform des Verfahrens sieht vor, dass der wenigstens eine Kennwert des Fahrbetriebs des Kraftfahrzeugs eine Geschwindigkeit des Kraftfahrzeugs ist. Aufgrund der physikalischen Gegebenheit, dass die Geschwindigkeit des Kraftfahrzeugs einen wesentlichen Einfluss auf eine Kontrollierbarkeit des Fahrzeugs durch den Fahrer hat, wird dadurch vorteilhaft eine wichtige Einflussgröße für das Ansteuern der Sicherheitsaktuatorik berücksichtigt. Ein Eingriffsgrad der Sicherheitsaktuatorik kann dadurch vorteilhaft sehr effizient an die jeweilige Geschwindigkeitssituation des Fahrzeugs angepasst werden.

Eine vorteilhafte Weiterbildung des erfindungsgemäßen Verfahrens sieht vor, dass der wenigstens eine Kennwert des Fahrbetriebs des Kraftfahrzeugs ein Schwimmwinkel des Kraftfahrzeugs ist. Ebenso wie die Geschwindigkeit des Kraftfahrzeugs stellt auch der Schwimmwinkel einen bedeutenden Parameter einer Kontrollierbarkeit des Kraftfahrzeugs dar. Durch die Berücksichtigung des Schwimmwinkels wird somit der Eingriffsgrad der Sicherheitsaktuatorik vorteilhaft entscheidend mitbestimmt.

Eine vorteilhafte Weiterbildung des Verfahrens sieht vor, dass beim Ansteuern der Sicherheitsaktuatorik ein fahrzeugsitzbasiertes Rückhaltemittel verstellt wird. Fahrzeugsitzbasierte Rückhaltemittel repräsentieren einen nennenswerten Anteil des Schutzpotentials durch Sicherheitsaktuatorik im Kraftfahrzeug, so dass durch deren erfindungsgemäße Verstellung die Einflussnahme des Fahrers auf das Kraftfahrzeug unter Umständen bedeutsam erhöht sein kann.

Bevorzugt ist vorgesehen, dass wenigstens eine Ebene eines Kraftfahrzeugsitzes verstellt wird. Auf diese Art und Weise kann vorteilhaft eine Position des Fahrers des Kraftfahrzeugs im Fahrzeugsitz derart verändert werden, dass der Fahrer in einer Vor-Aufprall-Phase in sicherheitstechnischer Hinsicht in eine optimierte Position gebracht wird.

Eine vorteilhafte Weiterbildung des erfindungsgemäßen Verfahrens sieht vor, dass das Verstellen des fahrzeugsitzbasierten Rückhaltemittels im Wechselspiel mit einem Verstellen einer Gurtstraffereinrichtung des Kraftfahrzeugs durchgeführt wird. Auf diese Weise wird unterstützt, dass dem Fahrer eine optimierte Einflussnahme auf das Kraftfahrzeug unter Berücksichtigung von optimierten Sicherheitsaspekten bereitgestellt wird.

Eine vorteilhafte Weiterbildung des erfindungsgemäßen Verfahrens sieht vor, - dass ein Ausmaß eines Verstellwegs und/oder eine Verstellgeschwindigkeit des Sitzes in Abhängigkeit vom Gefährdungsmodell und von der Kontrollierbarkeit des Kraftfahrzeugs ausgebildet ist. Damit wird vorteilhaft erreicht, dass ein Eingriff der Sicherheitsaktuatorik auf den Fahrer vorteilhaft optimiert bzw. ein Eingriff des Fahrers auf das Kraftfahrzeug optimiert ist.

Eine vorteilhafte Ausführungsform des erfindungsgemäßen Verfahrens sieht vor, dass die vorausschauende Sensorik zur Ermittlung einer Vorphase eines Front-, und/oder eines Seiten- und/oder eines Heckaufpralls des Kraftfahrzeugs verwendet wird. Dadurch wird das Gefährdungsmodell des Kraftfahrzeugs vorteilhaft für Vorphasen von unterschiedlichen Unfallszenarien bestimmt, so dass der Eingriff der Sicherheitsaktuatorik optimiert auf die Unfallcharakteristik abgestimmt wird.

Eine vorteilhafte Weiterbildung des Verfahrens sieht vor, dass das Gefährdungsmodell als ein Produkt einer Aufprall-Wahrscheinlichkeit mit einer vorausermittelten Aufprall-Schwere des Kraftfahrzeugs ausgebildet ist. Auf diese Weise wird das Gefährdungsmodell des Kraftfahrzeugs je nach Fahrsituation optimiert vorausermittelt, so dass der Auslösungsgrad der Sicherheitsaktuatorik optimiert durchgeführt wird.

Eine vorteilhafte Weiterbildung des Verfahrens sieht vor, dass das Verfahren mittels eines Algorithmus implementiert ist. Dadurch wird eine einfach anzuwendende, einfach zu adaptierende Art der Ausführung des erfindungsgemäßen Verfahrens bereitgestellt.

Eine vorteilhafte Weiterbildung des Verfahrens sieht vor, dass zu einem Wechsel zwischen Stützstellen des Algorithmus eine Nachschlagetabelle oder eine Interpolation verwendet wird. Vorteilhaft können auf diese Weise einfache Wechsel zwischen Stützstellen des Algorithmus durchgeführt werden, wodurch ein operatives Verhalten des Algorithmus in gewünschter Weise einfach angepasst werden kann.

Die Erfindung wird mit weiteren Merkmalen und Vorteilen im Folgenden anhand von drei Figuren detailliert erläutert. Die Figuren dienen vor allem dazu, die erfindungswesentlichen Prinzipien herauszustellen und sind nicht dazu gedacht, dass ihnen konstruktive Einzelheiten oder konkrete Einzelheiten von Verfahrensschritten zu entnehmen sind.

In den Figuren zeigt:
- Fig. 1: ein Blockschaltbild eines konventionellen Verfahrens zum Ansteuern von Sicherheitsaktuatorik eines Kraftfahrzeugs;
- Fig. 2: ein Blockschaltbild einer Ausführungsform des erfindungsgemäßen Verfahrens zum Ansteuern von Sicherheitsaktuatorik eines Kraftfahrzeugs; und
- Fig. 3: eine prinzipielle Darstellung von erfindungsgemäßen Eingriffen von Sicherheitsaktuatorik eines Kraftfahrzeugs in einer Vor-Unfallphase des Kraftfahrzeugs.

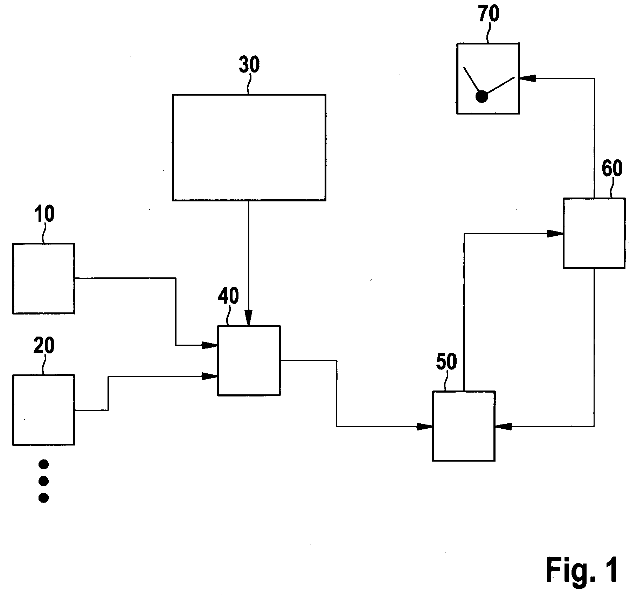

Fig. 1 zeigt in stark schematisierter Form ein Blockschaltbild eines Verfahrens zur Ansteuerung von Sicherheitsaktuatorik eines Kraftfahrzeugs gemäß Stand der Technik. Dabei wird mittels einer Situationserkennung 30 mit vorausschauender Sensorik des Kraftfahrzeugs (z.B. Radar-Abstandssensorik, Kamera im Stoßfänger, usw.) sowie mittels eines ersten Kennwerts 10 eines Fahrbetriebs (z.B. eine tatsächliche Geschwindigkeit des Kraftfahrzeugs) und mittels eines zweiten Kennwerts 20 eines Fahrbetriebs (z.B. ein Schwimmwinkel des Kraftfahrzeugs, d.h. eine Differenz zwischen einem Wunschwinkel und einem tatsächlichen Winkel der Lenkräder) ein Gefährdungsmodell 40 des Kraftfahrzeugs ermittelt. Ein Grad einer Gefährdung des Kraftfahrzeugs, der mittels der vorausschauenden Sensorik ermittelt wird, kann beispielsweise aus einem Produkt aus einer mittels Sensorik bestimmten Aufprall-Wahrscheinlichkeit mit einer mittels Sensorik vorausbestimmten Aufprall-Schwere des Kraftfahrzeugs ermittelt werden. Alternativ oder zusätzlich zum ersten Kennwert 10 und zum zweiten Kennwert 20 sind auch noch weitere Kennwerte eines Fahrbetriebs des Kraftfahrzeugs denkbar, was in der Fig. 1 durch Punkte angedeutet ist.

Eine Ausgangsgröße des Gefährdungsmodells 40 wird als Eingangsgröße einem Algorithmus 50 zugeführt, der beispielsweise als ein Verstellalgorithmus für eine Steuereinrichtung 60 (beispielsweise ein elektronisches KFZ-Sitz-Steuergerät) des Kraftfahrzeugs ausgebildet ist. Eine Ausgangsgröße des Algorithmus 50 wirkt als eine Eingangsgröße auf die Steuereinrichtung 60 ein, indem der Algorithmus 50 der Steuereinrichtung 60 einen Sollwert vorgibt. Die Steuereinrichtung 60 ist durch eine Übermittlung eines Ist-Werts an den Algorithmus 50 mit dem Algorithmus 50 rückgekoppelt.

Die Steuereinrichtung 60 steuert eine Sicherheitsaktuatorik 70 des Kraftfahrzeugs an. Die Sicherheitsaktuatorik 70 kann beispielsweise als ein fahrzeugsitzbasiertes Rückhaltemittel ausgebildet sein. Das fahrzeugsitzbasierte Rückhaltemittel umfasst im einfachsten Fall eine Verstellung von Sitzverstellebenen, wobei eine Sitzhöhenverstellung, eine Sitzlängsverstellung, eine Verstellung von Sitzflächenneigung bzw. Sitzlehnenneigung oder auch eine Verstellung einer Kopfstütze oder einer Sitzkontur (z.B. durch Seitenwangen) vorgesehen sein können. In komplexeren Systemen kann das Verstellen des fahrzeugsitzbasierten Rückhaltemittels in einem Wechselspiel mit einer Gurtstraffereinrichtung des Kraftfahrzeugs (z.B. zum Beseitigen von Gurtlosen) durchgeführt werden. Auf die beschriebene Weise wird eine diversifizierte Sitzverstellung des Kraftfahrzeugs anhand von konkreten Gefährdungssituationen des Kraftfahrzeugs durchgeführt.

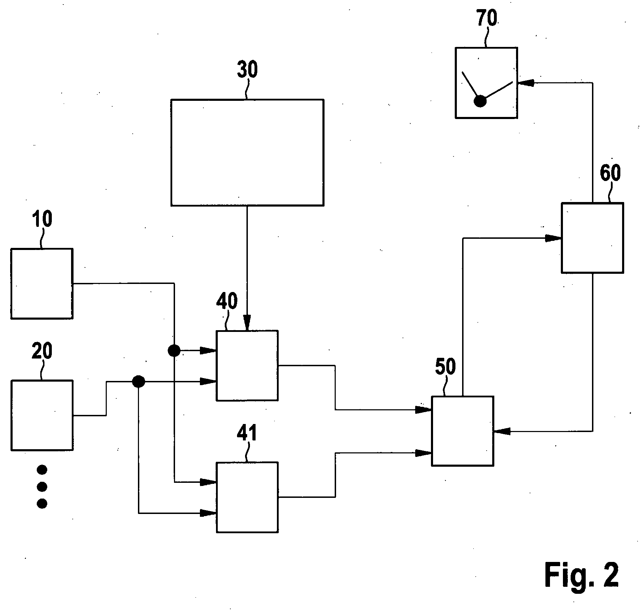

Fig. 2 zeigt eine Ausführungsform des erfindungsgemäßen Verfahrens zum Ansteuern von Sicherheitsaktuatorik eines Kraftfahrzeugs. Fig. 2 entspricht der Fig. 1 mit der einzigen Ausnahme, dass nunmehr als Eingangsgröße für den Algorithmus 50 auch eine Kontrollierbarkeit 41 des Kraftfahrzeugs herangezogen wird. Die Kontrollierbarkeit 41 stellt ein Maß dafür dar, inwieweit das Kraftfahrzeug aufgrund von konkreten Fahrbetriebsparametern vom Fahrer des Kraftfahrzeugs kontrolliert werden kann und wird - ebenso wie das Gefährdungsmodell 40 - mittels des ersten Kennwerts 10 und des zweiten Kennwerts 20 des Fahrbetriebs des Kraftfahrzeugs ermittelt. Die Kontrollierbarkeit 41 wird vorzugsweise mittels eines Zustandsbeobachters aus Fahrdynamikdaten geschätzt. Auf diese Weise ergibt sich für den Algorithmus 50 als Eingangsgröße - zusätzlich zu einer Ausgangsgröße des Gefährdungsmodells 40 - eine weitere Eingangsgröße in Form einer Ausgangsgröße der Kontrollierbarkeit 41. Die Wirkung des Algorithmus 50 auf die Steuereinrichtung 60 bzw. jene der Steuereinrichtung 60 auf die Sicherheitsaktuatorik 70 entspricht jener von Fig. 1 und wird deshalb nicht nochmals erläutert.

Man kann aus Fig. 2 also erkennen, dass mittels der Erfindung eine Verfeinerung bzw. Verbesserung des Algorithmus 50 dadurch erreicht wird, dass eine weitere Eingangsgröße für den Algorithmus 50 in Form der Kontrollierbarkeit 41 verwendet wird. Resultierend aus dieser Maßnahme wird auch eine Ausgangsgröße des Algorithmus 50 mittels der Erfindung insofern verfeinert bzw. verbessert, als die Steuereinrichtung 60 konkrete Vor-Unfall-Situationen diversifizierter einstufen und dadurch eine Auslösestrategie für die Sicherheitsaktuatorik 70 verbessert ausgestalten kann. Bei der Ausführung des Algorithmus 50 können zu einem Wechsel zwischen Stützstellen des Algorithmus 50 beispielsweise eine Nachschlagetabelle (Look-up-Table) oder einer Interpolation zwischen den Stützstellen verwendet werden.

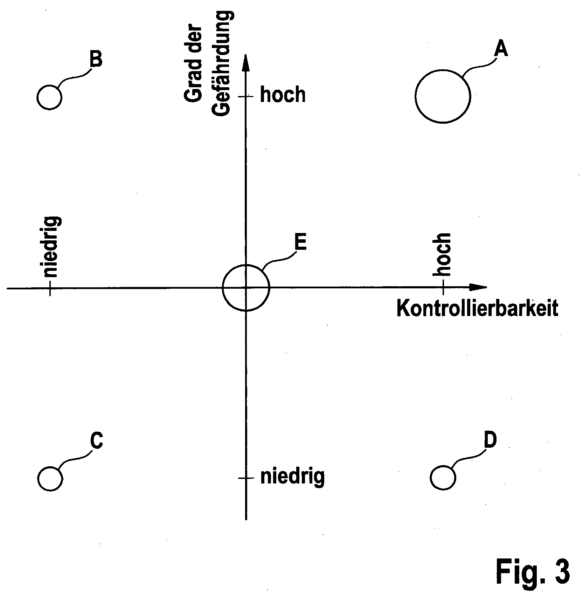

Fig. 3 zeigt anhand eines prinzipiellen Vierquadranten-Zustandsdiagramms eine prinzipielle Wirkungsweise des erfindungsgemäßen Verfahrens zum Ansteuern von Sicherheitsaktuatorik 70 eines Kraftfahrzeugs. Dabei ist eine Abhängigkeit des Eingriffs der Sicherheitsaktuatorik 70 von den zwei Parametern "Gefährdungsgrad" und "Kontrollierbarkeit" exemplarisch an fünf Stützstellen dargestellt.

Die x-Achse des Diagramms skaliert eine Kontrollierbarkeit des Kraftfahrzeugs, Die y-Achse des Diagramms skaliert einen Grad einer Gefährdung des Kraftfahrzeugs, der mittels der Situationserkennung 30 mit vorausschauender Sensorik ermittelt wird. Im ersten Quadranten des Graphen von Figur 3 ist ein Zustand einer hohen Kontrollierbarkeit und eines hohen Gefährdungsgrads des Kraftfahrzeugs angedeutet. Resultierend daraus ist ein Eingriff A auf eine Sicherheitsaktuatorik 70 des Kraftfahrzeugs bzw. eine Stützstelle A des Algorithmus 50 (beispielsweise Verstellwege/Verstellgeschwindigkeit von Fahrzeugsitzen) stark ausgeprägt. Dies ist durch einen großen Kreisumfang bzw. einen großen Kreisdurchmesser des Eingriffs A graphisch angedeutet. Der an sich starke Eingriff A kann zwar eine erhöhte Wechselwirkung des Fahrzeugs mit dem Fahrer bewirken, was sich in diesem Fall aber insofern nicht negativ auswirkt, als zum Zeitpunkt der Auslösung der Sicherheitsaktuatorik 70 ein hoher Grad an Kontrollierbarkeit 41 des Kraftfahrzeugs, d.h. eine stabile Fahrsituation vorliegt.

Im zweiten Quadranten des Diagramms von Fig. 3 ist ein Zustand einer hohen Gefährdung und einer niedrigen Kontrollierbarkeit des Kraftfahrzeugs angedeutet. Resultierend daraus ist ein Eingriff B der Sicherheitsaktuatorik 70 (bzw. eine Stützstelle B des Algorithmus 50) auf das Kraftfahrzeug klein bzw. gering ausgebildet. Dies ist durch einen kleinen Kreisumfang beziehungsweise einen kleinen Kreisdurchmesser des Eingriffs B angedeutet.

Im dritten Quadranten des Diagramms von Fig. 3 ist ein Zustand einer niedrigen Gefährdung und einer niedrigen Kontrollierbarkeit des Kraftfahrzeugs prinzipiell dargestellt. Resultierend daraus ist ein Eingriff der Sicherheitsaktuatorik 70 bzw. Stützstelle C des Algorithmus 50 gering ausgebildet, was durch eine grafische Darstellung (kleiner Kreisumfang, kleiner Kreisdurchmesser) des Eingriffs C angedeutet ist.

Im vierten Quadranten des Diagramms von Figur 3 ist ein Zustand einer hohen Kontrollierbarkeit und einer niedrigen Gefährdung des Kraftfahrzeugs angedeutet. Resultierend daraus ist ein Eingriff D der Sicherheitsaktuatorik 70 des Kraftfahrzeugs bzw. eine Stützstelle D des Algorithmus 50 gering ausgebildet. Dies ist durch eine grafische Ausgestaltung (kleiner Kreisumfang, kleiner Kreisdurchmesser) des Eingriffs D angedeutet.

In einem Zustand, der einem Schnittpunkt von x- und y-Achse entspricht, liegen eine mittlere Kontrollierbarkeit und eine mittlere Gefährdung des Kraftfahrzeugs vor. In diesem Fall ist ein Eingriff E der Sicherheitsaktuatorik 70 bzw. eine Stützstelle E des Algorithmus 50 mittelgroß ausgebildet. Dies ist durch eine grafische Ausgestaltung (mittelgroßer Kreisumfang, mittelgroßer Kreisdurchmesser) des Eingriffs E angedeutet.

Mittels des erfindungsgemäßen Verfahrens ist es also vorteilhaft möglich, den Eingriffsgrad von Sicherheitsaktuatorik 70 des Kraftfahrzeugs in Abhängigkeit von einem Gefährdungsmodell und einer Kontrollierbarkeit des Fahrzeugs größenmäßig auszugestalten. Auf diese Weise wird ein Fahrer des Kraftfahrzeugs im Fahrbetrieb vorteilhaft nicht zu stark irritiert, so dass je nach den Umständen eine bedrohliche Fahrsituation durch eine manuelle Einflussnahme des Fahrers (beispielsweise durch einen starken Lenkeingriff oder ein Betätigen des Bremspedals des Kraftfahrzeugs, usw.) noch korrigiert werden kann. Durch einen der Situation angepassten Eingriff der Sicherheitsaktuatorik wird dem Fahrer somit eine Gelegenheit in die Hand gegeben, drohende Unfall-Situationen durch persönliches Eingreifen (z.B. Lenken, Bremsen) noch abzuwenden.

Ein anschauliches Beispiel für die Wirkungsweise des erfindungsgemäßen Verfahrens liefert eine Fahrt des Kraftfahrzeugs mit Höchstgeschwindigkeit vₘₐₓ. In einem solchen Fall ergibt sich eine stark eingeschränkte Kontrollierbarkeit durch den Fahrer und es wird erfindungsgemäß z.B. eine sicherheitsaktuatorische Sitzverstellung in ihrer Stärke reduziert bzw. gänzlich unterdrückt.

Es ist selbstverständlich intendiert, dass mittels des erfindungsgemäßen Verfahrens jegliche Art von Sicherheitsaktuatorik 70 angesteuert, ausgelöst bzw. aktiviert werden kann. Die geschilderte Verstellung eines fahrzeugsitzbasierten Rückhaltemittels ist deshalb lediglich als eines von vielen möglichen Beispielen der Sicherheitsaktuatorik 70 anzusehen und kann von jeglicher existierender, beziehungsweise in Zukunft noch zu entwickelnder Sicherheitsaktuatorik 70 ergänzt bzw. ersetzt werden.

Aus Fig. 3 wird klar, dass sich bei einer niedrigen Kontrollierbarkeit 41 des Kraftfahrzeugs vergleichsweise geringe Eingriffe der Sicherheitsaktuatorik 70 ergeben, wobei die Eingriffe unter Umständen sogar gänzlich unterdrückt sein können. Bei einer hohen Kontrollierbarkeit 41 des Kraftfahrzeugs hängt demgegenüber ein Grad des Eingriffs der Sicherheitsaktuatorik 70 sehr von der Gefährdung des Kraftfahrzeugs ab. Bei einer hohen Gefährdung kann ein sehr starker Eingriff (Eingriff A) durchgeführt werden, der bis hin zu einem vorbeschleunigenden System reicht.

Im Falle des fahrzeugsitzbasierten Rückhaltemittels kann ein steigender Eingriffsgrad der Sicherheitsaktuatorik 70 eine Vergrößerung der Verstellwege bzw. eine Vergrößerung der Verstellgeschwindigkeit des Fahrzeugsitzes bedeuten, unter Umständen gekoppelt mit einer elektromotorischen Aktion der Gurtstraffereinrichtung. Ferner kann der Eingriffsgrad abhängig von einer momentanen Sitzposition des Fahrers und einer Verstellungsrichtung des fahrzeugsitzbasierten Rückhaltemittels ausgebildet sein.

Zusammenfassend wird mittels der Erfindung ein Verfahren zum Ansteuern von Sicherheitsaktuatorik eines Kraftfahrzeugs vorgeschlagen, welches vorhandene und adaptierte Sicherheitssysteme bzw. - aktuatoren im Kraftfahrzeug optimiert ansteuert und ausnutzt. Insbesondere benutzt die Erfindung zum Auslösen der Sicherheitsaktuatorik jegliche Informationen, welche definieren, wie gut ein Fahrer das Kraftfahrzeug zum Zeitpunkt der Auslösung der Sicherheitsaktuatorik steuern bzw. kontrollieren kann.

Vorteilhaft können auf diese Weise negative Auswirkungen von Fehlklassifizierungen der Sicherheitssysteme gemildert werden. Mittels des erfindungsgemäßen Verfahrens ist es vorteilhaft möglich, das operative Verhalten der Sicherheitsaktuatorik 70 dahingehend auszugestalten, dass es dem Fahrer unter Abwägung von Sicherheitsaspekten eine weitestgehende Einflussnahme auf das Kraftfahrzeug belässt. Dadurch wird günstiger Weise eine unter Umständen nicht mehr umkehrbare Entziehung der Kontrolle des Kraftfahrzeugs durch den Fahrer, ausgelöst z.B. durch ein Wegziehen des Lenkers vom Lenkrad, verhindert bzw. sehr stark reduziert.

Für den Fachmann ist es selbstverständlich, dass Merkmale der Ausführungsbeispiele in geeigneter Weise adaptiert und kombiniert werden können, ohne vom Gegenstand der Erfindung wie es in den Ansprüchen definiert ist abzuweichen. Insbesondere ist das erfindungsgemäße System für jegliche Sicherheitsaktuatorik des Kraftfahrzeugs geeignet, beispielsweise auch für eine Sicherheitsaktuatorik zur Beeinflussung eines Lenk- und/oder eines Bremsund/oder eines Geschwindigkeitsverhaltens des Kraftfahrzeugs.

## Patentansprüche

1. Verfahren zum Ansteuern von Sicherheitsaktuatorik (70) eines Kraftfahrzeugs, aufweisend:
• Ermitteln eines Gefährdungsmodells (40) des Kraftfahrzeugs mittels vorausschauender Sensorik und wenigstens eines Kennwerts (10,20) eines Fahrbetriebs des Kraftfahrzeugs, **gekennzeichnet durch**
• Ermitteln einer Kontrollierbarkeit (41) des Kraftfahrzeugs **durch** einen Fahrer des Kraftfahrzeugs mittels des wenigstens einen Kennwerts (10,20); und
• Ansteuern der Sicherheitsaktuatorik (70) in einem Ausmaß, welches von einer Kombination des Gefährdungsmodells (40) und der Kontrollierbarkeit (41) abhängt.

2. Verfahren nach Anspruch 1, wobei der wenigstens eine Kennwert (10,20) eine Geschwindigkeit des Kraftfahrzeugs ist.

3. Verfahren nach Anspruch 1 oder 2, wobei der wenigstens eine Kennwert (10,20) ein Schwimmwinkel des Kraftfahrzeugs ist.

4. Verfahren nach einem der Ansprüche 1 bis 3, wobei beim Ansteuern der Sicherheitsaktuatorik (70) ein fahrzeugsitzbasiertes Rückhaltemittel verstellt wird.

5. Verfahren nach Anspruch 4, wobei wenigstens eine Ebene eines Kraftfahrzeugsitzes verstellt wird.

6. Verfahren nach Anspruch 4 oder 5, wobei das Verstellen des fahrzeugsitzbasierten Rückhaltemittels (70) im Wechselspiel mit einem Verstellen einer Gurtstraffereinrichtung des Kraftfahrzeugs durchgeführt wird.

7. Verfahren nach einem der Ansprüche 4 bis 6, wobei ein Ausmaß eines Verstellwegs und/oder eine Verstellgeschwindigkeit des fahrzeugsitzbasierten Rückhaltemittels in Abhängigkeit vom Gefährdungsmodell (40) und von der Kontrollierbarkeit (41) des Kraftfahrzeugs ausgebildet ist.

8. Verfahren nach einem der vorhergehenden Ansprüche, wobei die vorausschauende Sensorik zur Ermittlung einer Vorphase eines Front-, und/oder eines Seiten- und/oder eines Heckaufpralls des Kraftfahrzeugs verwendet wird.

9. Verfahren nach einem der vorhergehenden Ansprüche, wobei das Gefährdungsmodell (40) als ein Produkt einer Aufprall-Wahrscheinlichkeit mit einer vorausermittelten Aufprall-Schwere des Kraftfahrzeugs ausgebildet ist.

10. Verfahren nach einem der vorhergehenden Ansprüche, wobei das Verfahren mittels eines Algorithmus (50) implementiert ist.

11. Verfahren nach Anspruch 10, wobei zu einem Wechsel zwischen Stützstellen des Algorithmus (50) eine Nachschlagetabelle oder eine Interpolation verwendet wird.

12. Vorrichtung mit einem Softwareprogramm zur Ausführung des Verfahrens nach einem der Ansprüche 1 bis 11.
- Vorrichtung nach Anspruch 12, wobei die Vorrichtung ein Steuergerät des Kraftfahrzeugs ist.

## Claims

1. Method for controlling a safety actuator system (70) of a motor vehicle, comprising:
• determination of a hazard model (40) of the motor vehicle by means of a predictive sensor system and at least one characteristic value (10, 20) of a drive operation of the motor vehicle; **characterized by**
• determination of a controllability (41) of the motor vehicle by a driver of the motor vehicle by means of the at least one characteristic value (10, 20); and
• control of the safety actuator system (70) to a degree which depends on a combination of the hazard model (40) and the controllability (41).

2. Method according to Claim 1, wherein the at least one characteristic value (10, 20) is a speed of the motor vehicle.

3. Method according to Claim 1 or 2, wherein the at least one characteristic value (10, 20) is an attitude angle of the motor vehicle.

4. Method according to one of Claims 1 to 3, wherein during the control of the safety actuator system (70) a vehicle seat-based restraint means is adjusted.

5. Method according to Claim 4, wherein at least one plane of a motor vehicle seat is adjusted.

6. Method according to Claim 4 or 5, wherein the adjustment of the vehicle seat-based restraint means (70) is carried out in an alternating fashion with adjustment of a seat belt pretensioner device of the motor vehicle.

7. Method according to one of Claims 4 to 6, wherein an extent of an adjustment travel and/or an adjustment speed of the vehicle seat-based restraint means are/is embodied as a function of the hazard model (40) and the controllability (41) of the motor vehicle.

8. Method according to one of the preceding claims, wherein the predictive sensor system is used to determine a preliminary phase of a front impact and/or side impact and/or rear impact of the motor vehicle.

9. Method according to one of the preceding claims, wherein the hazard model (40) is embodied as a product of an impact probability with a degree of impact severity of the motor vehicle which is determined in advance.

10. Method according to one of the preceding claims, wherein the method is implemented by means of an algorithm (50).

11. Method according to Claim 10, wherein a look-up table or interpolation is used for a changeover between reference points of the algorithm (50).

12. Device having a software program for carrying out the method according to one of Claims 1 to 11.
- Device according to Claim 12, wherein the device is a control device of the motor vehicle.

## Revendications

1. Procédé de commande d'un système d'actionnement de sécurité (70) d'un véhicule à moteur, consistant à :
• déterminer un modèle de mise en danger (40) du véhicule à moteur au moyen d'un système de capteur prévisionnel et au moins une valeur caractéristique (10, 20) d'un fonctionnement de conduite du véhicule à moteur ; **caractérisé par** l'étape consistant à
• déterminer une contrôlabilité (41) du véhicule à moteur par un conducteur du véhicule à moteur au moyen de l'au moins une valeur caractéristique (10, 20) ; et
• commander le système d'actionnement de sécurité (70) à un degré qui dépend d'une combinaison du modèle de mise en danger (40) et de la contrôlabilité (41).

2. Procédé selon la revendication 1, dans lequel l'au moins une valeur caractéristique (10, 20) est une vitesse du véhicule à moteur.

3. Procédé selon la revendication 1 ou 2, dans lequel l'au moins une valeur caractéristique (10, 20) est un angle d'attitude du véhicule à moteur.

4. Procédé selon l'une quelconque des revendications 1 à 3, dans lequel, lors de la commande du système d'actionnement de sécurité (70), un moyen de retenue basé sur le siège de véhicule est réglé.

5. Procédé selon la revendication 4, dans lequel au moins un plan d'un siège de véhicule à moteur est réglé.

6. Procédé selon la revendication 4 ou 5, dans lequel le réglage du moyen de retenue basé sur le siège de véhicule (70) est effectué en alternance avec un réglage d'un système raidisseur de ceinture du véhicule à moteur.

7. Procédé selon l'une quelconque des revendications 4 à 6, dans lequel un niveau de course de réglage et/ou une vitesse de réglage du moyen de retenue basé sur le siège de véhicule est établi en fonction d'un modèle de mise en danger (40) et de la contrôlabilité (41) du véhicule à moteur.

8. Procédé selon l'une quelconque des revendications précédentes, dans lequel le système de capteur prévisionnel est utilisé pour déterminer une phase préalable à un choc avant et/ou latéral et/ou arrière du véhicule à moteur.

9. Procédé selon l'une quelconque des revendications précédentes, dans lequel le modèle de mise en danger (40) est établi sous la forme d'un produit d'une probabilité de choc par une intensité de choc déterminée à l'avance pour le véhicule à moteur.

10. Procédé selon l'une quelconque des revendications précédentes, dans lequel le procédé est mis en oeuvre au moyen d'un algorithme (50).

11. Procédé selon la revendication 10, dans lequel une table de consultation ou une interpolation est utilisée lors d'une modification entre des points de support de l'algorithme (50).

12. Dispositif comprenant un programme logiciel destiné à mettre en oeuvre le procédé selon l'une quelconque des revendications 1 à 11.
- Dispositif selon la revendication 12, dans lequel le dispositif est un appareil de commande du véhicule à moteur.
